(19) **Europäisches Patentamt**

**European Patent Office**

**Office européen des brevets**

(11) **EP 1 471 545 B1**

(12) **EUROPEAN PATENT SPECIFICATION**

(45) Date of publication and mention
of the grant of the patent:
**18.01.2006 Bulletin 2006/03**

(51) Int Cl.:
*H01G 4/32* (2006.01)

(21) Application number: **03252299.7**

(22) Date of filing: **11.04.2003**

(54) **Super capacitor with high energy density**

Superkondensator mit hoher Energiedichte

Supercondensateur à haute densité d'énergie

(84) Designated Contracting States:
**DE FR GB IT**

(43) Date of publication of application:
**27.10.2004 Bulletin 2004/44**

(73) Proprietor: **Luxon Energy Devices Corporation
Danshuei Jen, Taipei 251 (TW)**

(72) Inventors:
  • **Shiue, Lih-Ren
    Hsiunglin,
    Hsinchu 307 (TW)**
  • **Chang, Jsung-Hsi
    Hsinchu 300 (TW)**
  • **Cheng, Chun-Shen
    Sanmin Chiu,
    Kaohsiung 807 (TW)**
  • **Li, Li-Ping
    Lungjing,
    Taichung 434 (TW)**
  • **Lo, Wan-Ting
    Hsinchu 300 (TW)**
  • **Huang, Kun-Fu
    Sanchung City,
    Taipei 241 (TW)**

(74) Representative: **Johnson, Terence Leslie
Marks & Clerk
Incorporating Edward Evans Barker
90 Long Acre
London WC2E 9RA (GB)**

(56) References cited:
  **GB-A- 2 056 774          US-B1- 6 479 179
  US-B1- 6 510 043          US-B1- 6 534 212**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention is related to the fabrication of a bipolar supercapacitor that is spirally wound with edge sealing, and in particular to the fabrication of supercapacitor modules comprised of a plural number of supercapacitor rolls disposed in the compartments of a container to provide powers of high voltages and high currents.

A battery is the most commonly used portable device for energy storage and energy supply. In the use of a battery, two functional criteria of the device, that is, use-time and power output determine its practicality, especially in vehicular applications. For attaining a long use-time, the electrodes of a battery are generally large in mass, otherwise, a new electrode material must be developed and verified, as in the battery evolution from lead-acid to lithium batteries. Contrary to the thick-electrode strategy, thin electrodes are employed for a battery to deliver high power output as taught in U.S. Pat. Nos. 5,047,300; 5,108,848; 5,223,351 and 5,993,983. In the first three patents of the afore-listed, both thick and thin electrodes are incorporated within the same battery case. A battery of thin metal film is utilized in patent '983 for being attached to an existing battery as a power booster. Similar attached-type of power assistant is revealed in U.S. Pat. Nos.5,568,537; 5,637,978 and 5,796,188. Charge and discharge of a battery have always involved chemical reactions, consequently, the power output of a battery is inherently limited by reaction rates. In terms of response time, chemical reactions are slower than physical processes. Therefore the power output of a battery is inferior to that of a capacitor for the latter depends on a physical process such as a charge accumulation or surface adsorption for energy storage. A capacitor is logically a better booster than thin-electrode batteries to the thick-electrode batteries, and the use-time of the latter can be prolonged as well.

Similar to the power density deficiency of a battery, a capacitor has its own shortfall in energy density. Ironically, it is the same physical process imparting capacitor high power density that causes low energy density for the capacitor. It may be described as "easy come easy go". The energy content of capacitor can be calculated by equation (1)

$$E = (1/2)CV^2 \qquad (1)$$

where E is the stored energy in joule (J), C is capacitance in farad (F), and V is working voltage of capacitor in volts (V). Apparently, by increasing both the values of C and V, the energy content of a capacitor is augmented. Because of the power of 2, V has a larger effect than C on improving the energy density of a capacitor. Next, the capacitance value (C) of a capacitor can be calculated through equation (2). Equation (2) depicts that C is proportional to the dielectric constant (K) of electrode material of a capacitor and the electrode area (A) in square meters, and inversely proportional to the distance between electrodes (D) in meters.

$$C = KA/D \qquad (2)$$

In order to enhance the value of C, electrode materials with high K values are developed, and the surface area of electrode (A) is enlarged by etching or other means, while the spacing between the electrode (D) is minimized through tight packaging of the electrodes. A supercapacitor is one kind of electrochemical capacitor that utilizes materials with tremendous surface area such as carbonaceous material, or a metal oxide with catalytic activity to store electric energy via physical processes at the interface of electrode and electrolyte. Besides supercapacitors, there are other names invented to describe capacitors with large capacitance values, for example, the device using carbonaceous material is called electric double layer capacitor (EDLC), while metal-oxide one is an ultracapcitor. Given large surface area, a supercapacitor can store static charge up to several thousands of farad.

Though a supercapacitor may contain a large value of capacitance, the voltage built across two electrodes, that is, the anode and the cathode, ranges only from 1.0 V to 3.0 V depending on whether an aqueous solution or an organic solution is employed as the electrolyte for the capacitor. As a matter of fact, the low working voltages of supercapacitors correspond to the decomposition voltages of the solvents of the electrolyte used for the capacitor. Generally, organic electrolytes offer higher working voltages than their aqueous counterpart at the expense of conductivity. While new electrolyte systems are being widely developed to elevate their withstanding voltages, the working voltage of a supercapacitor is conveniently and instantly promoted through series connections. There are two ways to achieve series connection for a supercapacitor, one of them is to integrate plural electrodes into a single capacitor as disclosed in U.S. Pat Nos. 5,450,279; 5,955,215; 6,005,764; 6,187,061; 6,449,139 and 6,507,479, the other is to assemble plural individual capacitor units after encapsulation into a power module as revealed in U.S. Pat. Nos. 6,072,691 and 6,215,278. In-cell connection of plural electrodes presents several advantages over the series connection of multiple encapsulated units: 1) only one casing is employed versus plural containers for the latter, 2) short cable, or no connecting cable in some cases, versus long electrical cables for the latter, 3) one-time encapsulation versus multiple operations for the latter, and 4) homogenized internal resistance or equivalent series resistance (ESR) versus diversified ESRs among the units of the latter. For in-cell series connection of the electrodes, an effective and economic method is the utilization of bipolar electrode. The forgoing electrode is an electrode that can serve simultaneously as positive and negative electrodes. In other words, one side of the bipolar electrode carries positive polarity and the other side negative. Structurally, the bipolar electrode is created by confining electrolyte within two electrodes of a unit cell with no communication of electrolyte between cells. Henceforth, the minimum number of electrodes of a bipolar packaging is three, wherein the first and third electrodes are anode and cathode, respectively, and the middle one is the bipolar electrode. Using the bipolar design, two unit cells are connected in series without connecting wire to form a single package, and less material is consumed to attain the same operation voltage as that provided from series connection of two encapsulated capacitor individuals. This will be elaborated in the detailed description of the invention.

GB2,056,774 describes a prior art capacitor of high voltage and low capacitance US6,510,043 discloses a spirally wound capacitor of the prior art.

The prior art, for example .U.S. Pat. Nos. 5,450,279 and 6,005,764 have utilized the bipolar design to assemble their capacitors. Nevertheless, both works rely on stacking of electrodes to construct the capacitors. Patent '279 also employs separator bag, embedded separator and embedded current collector for the bipolar effect, whereas patent '764 uses painstaking piling of numerous unit cells, for example, 100 pairs of anode and cathode for a working voltage of 100V. Assembly of cells by the stacking approach requires many processing steps at manufacturing, which will reduce the throughput while increasing the cost. Furthermore, after the electrodes are stacked, the whole stack is often secured by two end plates in conjunction with bolts and nuts resulting in a bulky and heavy device. A supercapacitor should be fabricated through easy preparation of the unitary cell, followed by simple assembly and packaging to meet the application needs. When the cost of a supercapacitor can be controlled by simple and productive fabrication, together with just-enough use of material, the capacitor may be widely accepted.

Supercapacitor is a versatile energy-storage device, yet it receives incommensurate attention in the industries. Unit price and electrical performance are the two major causes that prevent supercapacitors from prevalence. Accordingly, an object of the present invention is to fabricate a supercapacitor with sufficient energy density in a single package to fulfill application requirements.

According to the invention there is provided a high energy-density supercapacitor, comprising: an anode; a cathode; at least one bipolar electrode interposed between the anode and the cathode; a plurality of separators wherein a separator is disposed after the anode, the cathode and the bipolar electrode, respectively; and an electrolyte impregnating the separators, wherein the anode, the cathode, the bipolar electrode and the separators are spirally wound to form a roll with an electric lead attached to the anode and a separate electric lead attached to the cathode.

According to a further aspect of the invention there is provided a high energy-density supercapacitor, comprising: a plurality of capacitor rolls, each comprising an anode; a cathode; a plurality of separators disposed after the anode, the cathode and the bipolar electrode, respectively; and an electrolyte impregnating the separators, wherein the anode, the cathode, the bipolar electrode and the separators are spirally wound to form a roll with an electric lead attached to the anode and a separate electric lead attached to the cathode; and a multiple-compartment container for containing the rolls, wherein each roll is disposed in a compartment of the multiple-compartment container for series connection, parallel connection or a combination of the two.

Thus, integration of the required number of unit cells into one piece of the desired device at the fabrication stage involves lower cost and less effort than post conjunction of encapsulated capacitor individuals. Furthermore, such integration will offer end users a lot of convenience.

Using the present invention it is possible to provide a spiral winding of as needed electrodes and separators into a cylindrical, oval or square roll of a unitary supercapacitor. Each unitary capacitor is prepared in the right size to yield sufficient capacitance as demanded by applications, as well as in an adequate configuration for the highest space utilization of the capacitor housing. Comparing to stacking, winding can generate high surface area for the unitary supercapacitor in one step of operation. Using automatic machines, the winding operation can produce a supercapacitor at a high throughput so that the products have commercial viability.

Using the present invention it is also possible to employ bipolar packaging for promoting the working voltage of a unitary supercapacitor. There may be four applications of edge sealing at four different stages of spiral winding of the electrodes and separators using a curable polymer. Not only the edge sealing can confine the electrolytes within two electrodes of every unit cell, but also it can insulate the electrodes to prevent electric shorts or electrochemical reactions, so that the leakage current (LC) of the capacitor may be reduced. As the electrodes are fixed through edge sealing, convulsion damage of the electrodes at charging and discharging of the capacitor may be minimized.

It is also possible to place as needed a number of unitary supercapacitors in a container with an as needed number of compartments so that the individual units can be integrated into a single device with sufficient energy density. When the power load of an application is determined, the number, as well as the dimension, of the compartments of capacitor housing can then be decided. Correspondingly, the unitary supercapacitors are fabricated and assembled in the container to meet the application need without undue wasting of material. There is no restriction on the shape of container to house the unitary supercapacitors as long as the integrated supercapacitor can fit the space of application.

Further, it is possible to employ a curable potting material to hermetically seal the capacitor housing to complete the integration of unitary supercapacitors. In conjunction with the edge sealing, potting should collectively and effectively assist the electrodes against convulsion damages from mechanical movements induced during charge and discharge of the supercapacitors. Many potting materials can provide a mechanical strength comparable to that offered by bolts and nuts. Nevertheless, the potting operation is easier and quicker than screwing, and the former also presents a permanent fastening.

It is to be understood that both the foregoing general description and the following detailed description are exemplary, and are intended to provide further explanation of the invention as claimed.

The accompanying drawings are included to provide a further understanding of the invention, and are incorporated in and constitute a part of this specification. The drawings illustrate embodiments of the invention and, together with the description, serve to explain the principles of the invention. In the drawings,

FIG. 1 depicts a typical roll of spirally wound supercapacitor containing 2 sheets of electrodes and 2 sheets of separators according to a preferred embodiment of the invention;

FIG. 2 depicts a manual winder that can yield an elongated square roll of electrodes according to the preferred embodiment of the invention;

FIG. 3 depicts six unitary rolls disposed in the six compartments of a container, therein the rolls are connected in series according to another preferred embodiment of the invention;

FIG. 4 depicts an integrated supercapacitor that has high capacitance value and high working voltage according to a preferred embodiment of the invention; and

Fig. 5 is the discharging curves at four different discharging rates of an exemplary supercapacitor as illustrated in FIG. 4.

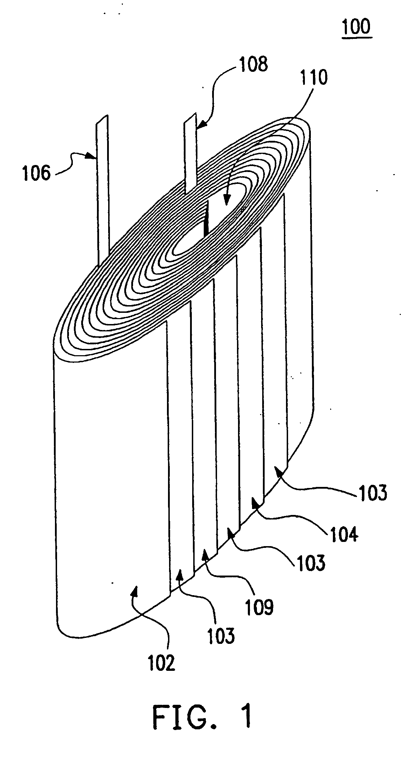

Supercapacitor development has actively been continued in two areas, one is the upgrading of the device, the other is innovative applications of the capacitor. Without potent and affordable supercapacitors, the applications cannot be realized. There are a lot of efforts devoted to improve the energy of the device. Both capacitance and voltage must collectively reach their respective minimal levels as defined by a load, otherwise, the supercapacitor is unable to drive that load. However, unitary supercapacitors are commonly fabricated to operate under a voltage of 3.0V, or 2.3 to 2.5V to be exact, whereas the capacitance value of a capacitor may exceed 1000F. Many applications, for example, memory backup of computers and internal-combustion engines of vehicles, require a driving voltage higher than 3.0V yet less than 1000F in capacitance need. This is the dilemma for users in that two 2.5V capacitors have to be connected in series for work that only demands 3.0 or 3.3V. Not only the cost is high, but there may not be enough room for two capacitors. It would be beneficial to raise the working voltage of unitary supercapacitor from 2.5 to 5.0 V. Through an ingenious packaging, a unitary supercapacitor can easily attain a working voltage of 5.0V and higher, using less material than the conventional assembly. FIG. 1 shows a preferred embodiment of the invention, wherein an elongated square roll **100** is formed by spirally winding of one anode **102** and one cathode **104** along with two separators **103.** Each of the two electrodes is also attached, by spot welding or crimping, to an electric lead such as the anode lead **106** and cathode lead **108.** Incidentally, FIG. 1 also illustrates the basic architecture of conventional supercapacitor fabricated by concentric winding, wherein two electrodes and two separators are employed as well. Electrodes **102** and **104** are most easily prepared by roller coating of a paste of economical and active material, such as activated carbon, $Fe_3O_4$, $MnO_2$ or NiO, on an economical substrate, such as aluminum foil of 20 to 100$\mu$m thickness, followed by thermal drying. Porous material such as Manila paper, polyethylene (PE) or polypropylene (PP) of 20 to 100$\mu$m thick may be employed as the separator to prevent shorts, also to contain electrolyte. After the roll **100** is impregnated with an electrolyte, for example, 1M tetraethylammonium tetrafluoroborate ($(C_2H_5)_4NBF_4$) in propylene carbonate (PC), the as prepared capacitor can be charged to a working voltage of 2.5V, whereas the capacitance value of the capacitor is determined by the surface area, or the length and width of electrodes enclosed in the roll **100.**

As seen in FIG. **1,** there is a separator sheet placed after every electrode foil so that an electrical short can be prevented. On inserting one electrode **109** and another separator **103** to the location after the separator **103** adjacent to the cathode **104,** along with edge sealing applied at four sides of the roll during or after the winding operation, a bipolar supercapacitor in unitary roll is then created. At the beginning of spiral winding of three electrodes and three separators, the starting ends of the six sheets are bound using a curable polymer, for example, epoxies, polyacrylates, polyurethanes or polyesters. This constitutes the first edge sealing of the bipolar packaging. Next, after the winding operation is completed and the roll is secured by a tape, the very ends of the six sheets are bound again with the same sealant to create a second edge sealing. Subsequently, the bottom of the roll is sealed using the polymer, while the top end of the roll with the protruding leads is sealed after an electrolyte is injected to soak the separators. Curing time of the edge sealant can be adjusted by modifying the sealant formulation. Thereupon, the electrolyte is confined within the roll by the edge sealing, and the resulting capacitor can be operated at 5.0V on using 1M $(C_2H_5)_4NBF_4/PC$ or other suitable organic solutions as the electrolyte. In reality, the above operation of edge sealing has turned two unit cells connected in series within in the unitary roll without using a connecting wire. In correspondence to anode **102,** the facing side of the middle electrode **109** functions as a cathode, while the other side of the same electrode is functionally an anode to cathode **104.** Because of two different polarities residing on the middle electrode **109,** it is called a bipolar electrode. All three electrodes, anode, cathode and bipolar electrode, are fabricated identically. If more bipolar electrodes **109** are incorporated between anode **102** and cathode **104,** a unitary supercapacitor is capable of working at voltages above 5.0V.

A 5.0V bipolar supercapacitor of wound type consists of three sheets of electrodes and three sheets of separator in one container. To attain the same working voltage of 5.0V, two conventional supercapacitors of 2.5V each must be connected in series using a connecting wire. Combining the two conventional capacitors, the package consumes four electrodes and four separators, as well as two containers. Henceforth, the bipolar packaging uses less material than the conventional way for constructing the supercapacitor of 5.0V working voltage. Furthermore, due to the fact that the separator contains most of the electrolyte and the electrolyte is the most expensive component of the supercapacitor, the more separators employed will lead to higher material cost for the supercapacitor. One more advantage of the bipolar packaging is that the edge sealing can also insulate the substrate metal, aluminum in the invention, which may be exposed during fabrication so that leakage current of the supercapacitor may be reduced from preventing the bare metal to react with any active contaminant, for example, water, which may be present in the system.

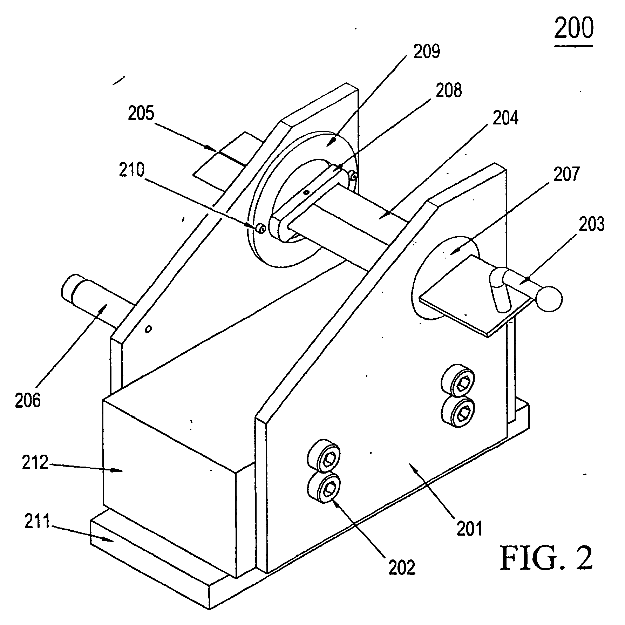

FIG. **2** demonstrates a manual winder **200** for fabricating a supercapacitor roll such as **100.** Without specifying the dimensions, winder **200** is made of a metal block **212** as the main body sitting atop an anvil **211** that can be secured to a desk top (securing nuts are not shown). There are two walls represented by **201** attached to the body block **212** via hexagonal screws designated as **202.** Ruler **204** is equipped with a cranking handle **203** for manual rotation, and a slit **205** for holding the starting ends of electrode and separator sheets. Using a rotatable plate **207,** baffle **209,** the setting bar **208** and securing screws designated as **210,** the ruler **204** can be disposed firmly across the walls of winder **200.** While slit **205** is holding the electrodes and separators, in conjunction with a tension produced by hand gripping of the foregoing sheets the guiding pole **206** can assist the multiple sheets to form a neat roll. As the winding operation is complete, the roll can be released by pulling the handle **203** towards the right hand side. Application of a sealant for edge sealing, as well as tapping the roll for compression are conducted manually. Nevertheless, all of the manual operations including winding, edge sealing, electric-lead binding and tapping can be automated. Manual winder **200** is used herein to provide an easy elucidation of the objects of the invention rather than claiming the winder as a mass production tool. Both of the diameter, that is, length in the longer direction, and height of the capacitor roll such as **100** are determined by the width and length of the left section that is outside the left wall of the winder, of ruler **204,** respectively. The third dimension of the roll such as **100,** or the roll thickness, can be easily controlled by the number of rotation of the cranking handle **203,** and the thickness of the roll in turn decides the capacitance value of the capacitor fabricated.

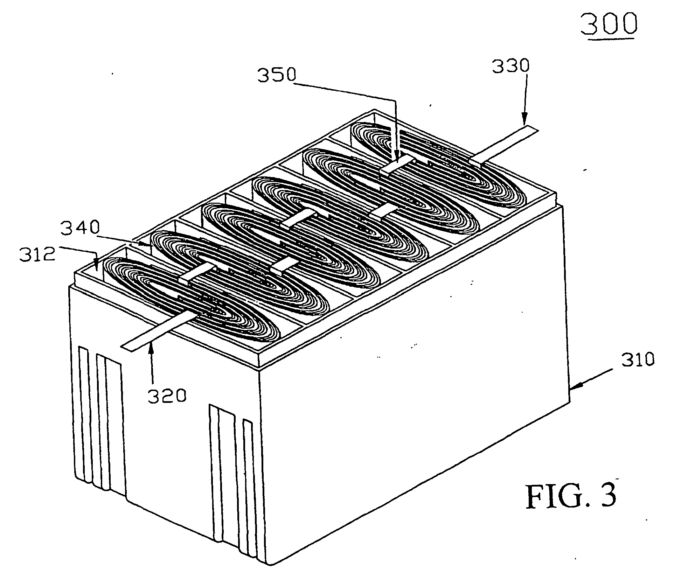

FIG. **3** illustrates another preferred embodiment of supercapacitor with high energy density **300** in accordance to the present invention. Supercapacitor **300** utilizes a conventional box-like container **310** of a lead-acid battery with six compartments represented by **312.** In each compartment is disposed an elongated square roll represented by **340** that is fabricated using a manual winder such as the one illustrated in FIG. **2.** Every capacitor roll is fabricated to attain the maximum utilization of the space of each compartment. Subsequently, the six capacitor rolls are connected in series through connecting cables represented by **350** to form the high energy-density module **300.** Including the leads **320** and **330** served as anode and cathode, respectively, all the connecting cables should be capable of carrying large currents, for example, hundreds of ampere (A). If the capacitor rolls **340** are conventional type using an organic electrolyte, supercapacitor **300** may be operated at 15V. However, when the capacitor rolls **340** fabricated by the bipolar packing, then supercapacitor **300** can be operated at 30V, yet its capacitance value will be lower than that contributed by conventional capacitor rolls. Considering equation (1), the electrode gap (D) is increased $n$ fold when $n$ pieces of equal-capacitance capacitors are connected in series, thus the overall capacitance equals to the capacitance of an individual capacitor divided by the number (n) of capacitors to form the pack. Using the same material system and electrode surface area, a bipolar supercapacitor containing one bipolar electrode should have at least half of the capacitance value of a non-bipolar counterpart.

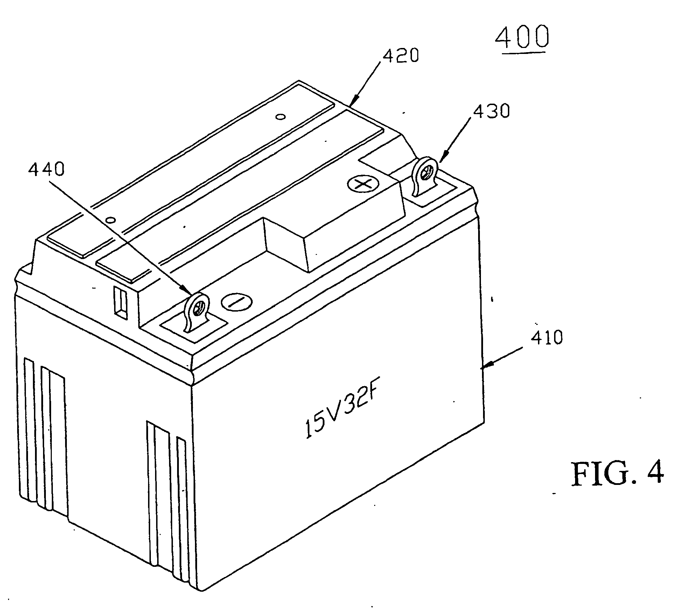

On the other hand, with twice the value of working voltage, the bipolar supercapacitor will have twice the energy content of the non-bipolar one according to equation (2). While the material developments require lengthy time and costly works to succeed in promoting the working voltage of a supercapacitor, series connection is an instant means to improve the working voltage of the capacitor. Series connection, however, often impairs the reliability of a system wherein the comprising components are in tandem configuration. If one component fails, the entire system will immediately break down. Therefore, the series connection should be conducted using as fewer components and connecting elements as possible. Bipolar design of the invention can serially connect two unit cells in one package just by means of a piece of bipolar electrode, and the working voltage is doubled comparing to the non-bipolar counterpart. The bipolar device is a building block that may facilitate further series connection to higher working voltages as illustrated in FIG. 3. By laying a cover **420** over the top of case **310** that is now **410** in FIG. 4, an encapsulated supercapacitor **400** with high capacitance value and high working voltage is fabricated in accordance to the invention. On the cover **420,** there is a positive stud terminal **430,** as well as a negative stud terminal **440**, which are electrically connected to leads **320** and **330,** respectively, for delivering various powers to miscellaneous loads. Both cover **420** and case **410** are made of an elastic material, for example, PE, PP, reinforced PE or reinforced PP. When a sealant is applied to the bottom of bipolar rolls **340** for edge sealing, the sealant may be also deposited in each compartment of case **410** so that the capacitor elements are fixed at a permanent position. Through edge sealing and fixture, the composing elements of supercapacitor **400** may be protected from convulsion damage during charge and discharge of the capacitor. Instead of using bolts and nuts, cover **420** and case **410** may be consolidated via a potting material that is similar to the edge sealant aforementioned. Besides the required capacitance values and working voltages, the supercapacitor should also possess a low value of ESR for supporting an application. A high value of ESR can depreciate the power output of supercapacitor below the driving level. Compacting the supercapacitor electrodes through concentric winding, edge sealing and fastening may collectively minimize the ESR of capacitor. Thereby, the invention provides fabrications of cylindrical, oval or square supercapacitors with capacitance values equal to or above 1F and working voltages equal to or above 5V, as well as ESR under 30mΩ.

The following example using spiral winding and container with multiple compartments is given only to demonstrate, rather than limiting, the fabrication of a high energy-density supercapacitor in accordance with the invention.

EXAMPLE

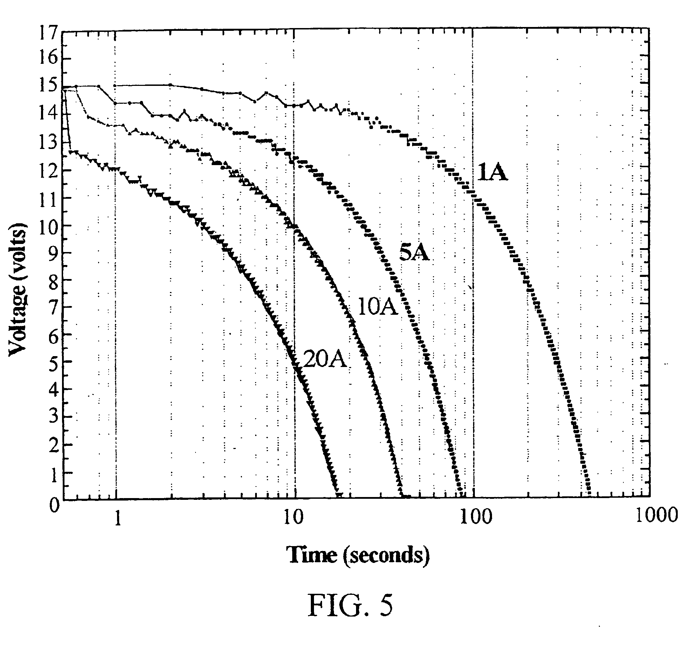

Six elongated square rolls are prepared on the manual winder as shown in FIG. 2. A six-cell lead-acid case that has a length of 11cm, width of 6.6cm, height of 8.5cm, and each compartment of $1.6 \times 6.3 \times 7$ cm is used to house the capacitor rolls. Every capacitor roll is comprised of 2 electrodes and 2 separators at a size to snugly fit the compartment. After the capacitor rolls are impregnated with 1M $(C_2H_5)_4NBF_4$/PC, the rolls are serially connected and encapsulated to form a supercapacitor of $15V \times 32F$ as indicated in FIG. 4. Though the supercapacitor is primitively fabricated through manual operation, it yields nice discharge curves at four different discharge rates as shown in FIG. 5. At a total weight of 550g and a measured peak current of 170A, the supercapacitor as fabricated has an experimental power density of 4.6 KW/Kg that is sufficient for many applications including jump start of automobiles.

It will be apparent to those skilled in the art that various modifications and variations can be made to the structure of the present invention without departing from the scope of the invention. In view of the foregoing, it is intended that the present invention covers modifications and variations of this invention provided they fall within the scope of the following claims.

**Claims**

1. A high energy-density supercapacitor, comprising:

   an anode (102),
   a cathode (104),
   at least one bipolar electrode (109) interposed between the anode (102) and the cathode (104); **characterized by**;
   a plurality of separators (103), wherein a separator (103) is disposed after the anode (102), the cathode (104) and the bipolar electrode (109), respectively; and
   an electrolyte impregnating the separator (103), wherein
   the anode (102), the cathode (104), the bipolar electrode (109) and the separators (103) are spirally wound to form a roll (100) with an electric lead (106) attached to the anode (102) and a separate electric lead (108) attached to the cathode (104).

2. A high energy-density supercapacitor according to claim 1, wherein the electric leads (106,108) attached to the anode (102) and the cathode (104) are at the same end of the roll (100) defined as a top of the roll (100).

3. A high energy-density supercapacitor according to claim 1 or claim 2, wherein the roll (100) is sealed at starting ends of all electrodes (102, 104, 109) and separators (103), at the ends of all electrodes (102,104,109) and separators (103) at the top of the roll (100) and at a bottom of the roll(100) using a curable polymer.

4. A high energy-density supercapacitor according to claim 3, wherein the roll (100) is edge sealed at four sides.

5. A high energy-density supercapacitor according to claim 4, wherein an edge sealant for sealing edges of the roll (100) comprises one selected from a group consisting of epoxies, polyacrylates, polyurethanes and polyesters.

6. A high energy-density supercapacitor according to any preceding claim, wherein the bipolarity of the bipolar electrode (109), is created by edge sealing, and no electric lead is attached to the bipolar electrode (109),

7. A high energy-density supercapacitor according to claim 6, wherein a plurality of unit cells are connected in series within a single package of roll (100) through use of at least one bipolar electrode (109).

8. A high energy-density supercapacitor according to claim 7, wherein a single package of capacitor is operated at voltages equal to or above 5V, with a capacitance value equal to or above 1F and an equivalent series resistance (ESR) value below 30mΩ.

9. A high energy-density supercapacitor according to any preceding claim, wherein the electrolyte impregnating the separators (103) comprises an organic electrolyte.

10. A high energy-density supercapacitor according to any preceding claim, wherein the roll (100) is in a cylindrical, oval or square configuration.

11. A high energy-density supercapacitor according to any preceding claim, further comprising:

> a plurality of said rolls (340); and
> a multiple-compartment container (310) for containing the rolls (340) wherein each roll is disposed in a compartment of the multiple-compartment container (310) for series connection, parallel connection or a combination of the two.

12. A high energy-density supercapacitor (300), comprising:

> a plurality of capacitor rolls (340), each comprising
> an anode (102);
> a cathode (104),
> a plurality of separators (103), wherein a separator (103) is disposed after the anode (102), the cathode (104) and the bipolar electrode (109), respectively; and
> an electrolyte impregnating the separators (103), wherein the anode (102), the cathode (104), the bipolar electrode (109) and the separators (103) are spirally wound to form a roll (100), with an electric lead (106) attached to the anode (102) and a separate electric lead (108) attached to the cathode (104), and
> a multiple-compartment container (310) for containing the rolls (340), wherein each roll (100) is disposed in a compartment of the multiple-compartment container (310) for series connection, parallel connection or a combination of the two.

13. A high energy-density supercapacitor (300) according to claim 12, wherein the electric leads (106, 108), connected to the anode (102) and the cathode (104) of a roll (100) are at the same end of the roll (100) defined as a top of the roll (100).

14. A high energy-density supercapacitor (300) according to claim 12, wherein a roll (100) is sealed at the starting ends of all electrodes (102,104,109) and separators (103) thereof, at the very ends of all electrodes (102,104,103) and separators (103) thereof, at the top thereof, and at a bottom thereof using a curable polymer.

15. A high energy-density supercapacitor (300) according to claim 14, wherein the roll (100) is edge sealed at four sides thereof.

16. A high energy-density supercapacitor (300) according to claim 15, wherein an edge sealant for sealing edges of the roll (100) includes one selected from a group consisting of epoxies, polyacrylates, polyurethanes and polyesters.

17. A high energy-density supercapacitor(300) according to any one of claims 12 to 16, wherein the electrolyte impregnating the separators (103) comprises an organic electrolyte.

18. A high energy-density supercapacitor (300) according to any one of claims 12 to 17, wherein the multi-compartment container (310) has at least two compartments.

19. A high energy-density supercapacitor (300) according to claim 18, wherein the container (310) has two detachable parts including a cover and a base, wherein the cover is for hermetic sealing, and the base is for containing the capacitor rolls (340) in the compartments therein.

20. A high energy-density supercapacitor (300) according to claim 19, wherein all parts of the container (310) are made of a material which includes one selected from a group consisting of PE, PP, reinforced PE and reinforced PP.

21. A high energy-density supercapacitor (300) according to claim 19, wherein the cover (420) and the base are consolidated by a potting material.

22. A high energy-density supercapacitor (300) according to claim 18, wherein the device formed by series connection of plural number of capacitor rolls (340) in the container (310) is operated at voltages equal to or above 5V, with a capacitance value equal to or above 1F and an equivalent series resistance (ESR) value below 30mΩ.

**Patentansprüche**

1. Superkondensator mit hoher Energiedichte, der aufweist:

   eine Anode (102);
   eine Kathode (104);
   mindestens eine zwischen die Anode (102) und die Kathode (104) geschaltete Bipolarelektrode (109);
   **gekennzeichnet durch**: mehrere Trennelemente (103), wobei je ein Trennelement (103) hinter der Anode (102), der Kathode (104) bzw. der Bipolarelektrode (109) angeordnet ist; und einen Elektrolyten, mit dem die Trennelemente (103) getränkt sind; wobei die Anode (102), die Kathode (104), die Bipolarelektrode (109) und die Trennelemente (103) spiralförmig zu einer Rolle (100) gewickelt sind, wobei eine elektrische Zuleitung (106) an der Anode (102) und eine getrennte elektrische Zuleitung (108) an der Kathode (104) angebracht ist.

2. Superkondensator mit hoher Energiedichte nach Anspruch 1, wobei die an der Anode (102) und der Kathode (104) angebrachten elektrischen Zuleitungen (106, 108) am gleichen Ende der Rolle (100) liegen, das als oberes Ende der Rolle (100) definiert ist.

3. Superkondensator mit hoher Energiedichte nach Anspruch 1 oder Anspruch 2, wobei die Rolle (100) an den Anfängen aller Elektroden (102, 104, 109) und Trennelemente (103), an den Enden aller Elektroden (102, 104, 109) und Trennelemente (103), am oberen Ende der Rolle (100) und am unteren Ende der Rolle (100) mit einem härtbaren Polymer versiegelt wird.

4. Superkondensator mit hoher Energiedichte nach Anspruch 3, wobei die Rolle (100) an vier Seiten kantenversiegelt wird.

5. Superkondensator mit hoher Energiedichte nach Anspruch 4, wobei ein Kantenversiegelungsmittel zum Versiegeln bzw. Abdichten der Kanten der Rolle (100) ein Mittel aufweist, das aus der Gruppe ausgewählt ist, die aus Epoxidharzen, Polyacrylaten, Polyurethanen und Polyestern besteht.

6. Superkondensator mit hoher Energiedichte nach einem der vorstehenden Ansprüche, wobei die Bipolarität der Bipolarelektrode (109) durch Kantenversiegelung erzeugt wird und keine elektrische Zuleitung an der Bipolarelektrode (109) angebracht wird.

7. Superkondensator mit hoher Energiedichte nach Anspruch 6, wobei mehrere Einheitszellen unter Verwendung mindestens einer Bipolarelektrode (109) innerhalb eines einzelnen Rollenpakets (100) in Reihe geschaltet werden.

8. Superkondensator mit hoher Energiedichte nach Anspruch 7, wobei ein einzelnes Kondensatorpaket mit Spannungen größer oder gleich 5 V, mit einem Kapazitätswert größer oder gleich 1F und einem Reihenersatzwiderstandswert (ESR-Wert) unter 30 mQ betrieben wird.

9. Superkondensator mit hoher Energiedichte nach einem der vorstehenden Ansprüche, wobei der Elektrolyt, mit dem die Trennelemente (103) getränkt sind, einen organischen Elektrolyten aufweist.

10. Superkondensator mit hoher Energiedichte nach einem der vorstehenden Ansprüche, wobei die Rolle (100) eine zylinderförmige, ovale oder quadratische Konfiguration aufweist.

11. Superkondensator mit hoher Energiedichte nach einem der vorstehenden Ansprüche, der ferner aufweist:

    mehrere Rollen (340); und
    einen Behälter (310) mit mehreren Fächern zur Aufnahme der Rollen (340), wobei jede Rolle zur Reihenschaltung, Parallelschaltung oder einer Kombination von beiden in einem Fach des Behälters (310) mit mehreren Fächern angeordnet ist.

12. Superkondensator (300) mit hoher Energiedichte , der aufweist:

    mehrere Kondensatorrollen (340), die jeweils aufweisen:

       eine Anode (102);
       eine Kathode (104);
       mehrere Trennelemente (103), wobei je ein Trennelement (103) hinter der Anode (102), der Kathode (104) bzw. der Bipolarelektrode (109) angeordnet ist; und einen Elektrolyten, mit dem die Trennelemente (103) getränkt sind, wobei die Anode (102), die Kathode (104), die Bipolarelektrode (109) und die Trennelemente (103) spiralförmig zu einer Rolle (100) gewickelt werden, wobei eine elektrische Zuleitung (106) an der Anode (102) und eine getrennte elektrische Zuleitung (108) an der Kathode (104) angebracht ist; und

einen Behälter (310) mit mehreren Fächern zur Aufnahme der Rollen (340), wobei jede Rolle (100) zur Reihenschaltung, Parallelschaltung oder einer Kombination von beiden in einem Fach des Behälters (310) mit mehreren Fächern angeordnet ist.

13. Superkondensator (300) mit hoher Energiedichte nach Anspruch 12, wobei die elektrischen Zuleitungen (106, 108), die an die Anode (102) und die Kathode (104) einer Rolle (100) angeschlossen sind, am gleichen Ende der Rolle (100) angeordnet sind, das als oberes Ende der Rolle (100) definiert ist.

14. Superkondensator (300) mit hoher Energiedichte nach Anspruch 12, wobei eine Rolle (100) an den Anfängen aller ihrer Elektroden (102, 104, 109) und Trennelemente (103), an den Enden aller ihrer Elektroden (102, 104, 109) und Trennelemente (103), an ihrem oberen Ende und an ihrem unteren Ende mit einem härtbaren Polymer versiegelt ist.

15. Superkondensator (300) mit hoher Energiedichte nach Anspruch 14, wobei die Rolle (100) an ihren vier Seiten kantenversiegelt ist.

16. Superkondensator (300) mit hoher Energiedichte nach Anspruch 15, wobei ein Kantenversiegelungsmittel zum Versiegeln der Kanten der Rolle (100) ein Mittel aufweist, das aus einer Gruppe ausgewählt ist, die aus Epoxidharzen, Polyacrylaten, Polyurethanen und Polyestem besteht.

17. Superkondensator (300) mit hoher Energiedichte nach einem der Ansprüche 12 bis 16, wobei der Elektrolyt, mit dem die Trennelemente (103) getränkt sind, einen organischen Elektrolyten aufweist.

18. Superkondensator (300) mit hoher Energiedichte nach einem der Ansprüche 12 bis 17, wobei der Behälter (310) mit mehreren Fächern mindestens zwei Fächer aufweist.

19. Superkondensator (300) mit hoher Energiedichte nach Anspruch 18, wobei der Behälter (310) zwei abnehmbare Teile aufweist, zu denen ein Deckel und ein Fuß gehören, wobei der Deckel zur hermetischen Abdichtung und der Fuß zur Aufnahme der Kondensatorrollen (340) in den darin enthaltenen Fächern vorgesehen ist.

20. Superkondensator (300) mit hoher Energiedichte nach Anspruch 19, wobei alle Teile des Behälters (310) aus einem Material bestehen, das ein Material einschließt, das aus einer Gruppe ausgewählt ist, die aus PE, PP, verstärktem PE und verstärktem PP besteht.

21. Superkondensator (300) mit hoher Energiedichte nach Anspruch 19, wobei der Deckel (480) und der Fuß durch eine Vergußmasse verfestigt werden.

22. Superkondensator (300) mit hoher Energiedichte nach Anspruch 18, wobei das durch Reihenschaltung mehrerer Kondensatorrollen (340) in dem Behälter (310) ausgebildete Bauelement mit Spannungen größer oder gleich 5 V, mit einem Kapazitätswert größer oder gleich 1 F und einem Ersatzreihenwiderstandswert (ESR-Wert) unter 30 mΩ betrieben wird.

## Revendications

1. Supercondensateur de densité d'énergie élevée, comprenant:

   une anode (102);
   une cathode (104);
   au moins une électrode bipolaire (109) qui est interposée entre l'anode (102) et la cathode (104),
   **caractérisé par** une pluralité de séparateurs (103), dans lequel un séparateur (103) est disposé après l'anode (102), après la cathode (104) et après l'électrode bipolaire (109), de façon respective; et
   un électrolyte qui imprègne les séparateurs (103),
   dans lequel:
   l'anode (102), la cathode (104), l'électrode bipolaire (109) et les séparateurs (103) sont enroulés en spirale de manière à former un rouleau (100), une connexion électrique (106) étant fixée à l'anode (102) et une connexion électrique séparée (108) étant fixée à la cathode (104).

2. Supercondensateur de densité d'énergie élevée selon la revendication 1, dans lequel les connexions électriques (106, 108) qui sont fixées à l'anode (102) et à la cathode (104) sont au niveau de la même extrémité du rouleau (100) qui est définie en tant que sommet du rouleau (100).

3. Supercondensateur de densité d'énergie élevée selon la revendication 1 ou 2, dans lequel le rouleau (100) est scellé au niveau des extrémités de début de toutes les électrodes (102, 104, 109) et de tous les séparateurs (103), au niveau des extrémités finales de toutes les électrodes (102, 104, 109) et de tous les séparateurs (103), au niveau du sommet du rouleau (100) et au niveau d'un fond du rouleau (100) en utilisant un polymère durcissable.

4. Supercondensateur de densité d'énergie élevée selon la revendication 3, dans lequel le rouleau (100) est scellé par bord au niveau de quatre côtés.

5. Supercondensateur de densité d'énergie élevée selon la revendication 4, dans lequel un agent de scellement de bord pour sceller les bords du rouleau (100) comprend un corps choisi parmi un groupe qui est constitué par des époxys, des polyacrylates, des polyuréthanes et des polyesters.

6. Supercondensateur de densité d'énergie élevée selon l'une quelconque des revendications précédentes, dans lequel la bipolarité de l'électrode bipolaire (109) est créée au moyen d'un scellement de bord et aucune connexion électrique n'est fixée à l'électrode bipolaire (109).

7. Supercondensateur de densité d'énergie élevée selon la revendication 6, dans lequel une pluralité de cellules unitaires sont connectées en série à l'intérieur d'un unique module de rouleau (100) par l'intermédiaire de l'utilisation d'au moins une électrode bipolaire (109).

8. Supercondensateur de densité d'énergie élevée selon la revendication 7, dans lequel un unique module de condensateur est actionné à des tensions égales ou supérieures à 5 V, moyennant une valeur de capacité qui est égale ou supérieure à 1 F et une valeur de résistance série équivalente (ESR) qui est inférieure à 30 mΩ.

9. Supercondensateur de densité d'énergie élevée selon l'une quelconque des revendications précédentes, dans lequel l'électrolyte qui imprègne les séparateurs (103) est constitué par un électrolyte organique.

10. Supercondensateur de densité d'énergie élevée selon l'une quelconque des revendications précédentes, dans lequel le rouleau (100) est selon une configuration cylindrique, ovale ou carrée.

11. Supercondensateur de densité d'énergie élevée selon l'une quelconque des revendications précédentes, comprenant en outre:

une pluralité desdits rouleaux (340); et
un conteneur à multiples compartiments (310) pour contenir les rouleaux (340), dans lequel chaque rouleau est disposé dans un compartiment du conteneur à multiples compartiments (310) pour une connexion série, une connexion parallèle ou une combinaison des deux.

12. Supercondensateur de densité d'énergie élevée (300), comprenant:

une pluralité de rouleaux de condensateur (340) dont chacun comprend:

une anode (102);
une cathode (104);
une pluralité de séparateurs (103), dans lequel un séparateur (103) est disposé après l'anode (102), après la cathode (104) et après l'électrode bipolaire (109), de façon respective; et
un électrolyte qui imprègne les séparateurs (103), dans lequel l'anode (102), la cathode (104), l'électrode bipolaire (109) et les séparateurs (103) sont enroulés en spirale de manière à former un rouleau (100), une connexion électrique (106) étant fixée à l'anode (102) et une connexion électrique séparée (108) étant fixée à la cathode (104); et

un conteneur à multiples compartiments (310) pour contenir les rouleaux (340), dans lequel chaque rouleau (100) est disposé dans un compartiment du conteneur à multiples compartiments (310) pour une connexion série, une connexion parallèle ou une combinaison des deux.

13. Supercondensateur de densité d'énergie élevée (300) selon la revendication 12, dans lequel les connexions électriques (106, 108) qui sont connectées sur l'anode (102) et sur la cathode (104) d'un rouleau (100) sont au niveau de la même extrémité du rouleau (100) qui est définie en tant que sommet du rouleau (100).

14. Supercondensateur de densité d'énergie élevée (300) selon la revendication 12, dans lequel un rouleau (100) est scellé au niveau des extrémités de début de toutes les électrodes (102, 104, 109) et de tous les séparateurs (103), au niveau des extrémités finales de toutes les électrodes (102, 104, 109) et de tous les séparateurs (103), au niveau du sommet du rouleau et au niveau d'un fond du rouleau (100) en utilisant un polymère durcissable.

15. Supercondensateur de densité d'énergie élevée (300) selon la revendication 14, dans lequel le rouleau (100) est scellé par bord au niveau de quatre côtés.

16. Supercondensateur de densité d'énergie élevée (300) selon la revendication 15, dans lequel un agent de scellement de bord pour sceller les bords du rouleau (100) comprend un corps choisi parmi un groupe qui est constitué par des époxys, des polyacrylates, des polyuréthanes et des polyesters.

**17.** Supercondensateur de densité d'énergie élevée (300) selon l'une quelconque des revendications 12 à 16, dans lequel l'électrolyte qui imprègne les séparateurs (103) comprend un électrolyte organique.

**18.** Supercondensateur de densité d'énergie élevée (300) selon l'une quelconque des revendications 12 à 17, dans lequel le conteneur à multiples compartiments (310) comporte au moins deux compartiments.

**19.** Supercondensateur de densité d'énergie élevée (300) selon la revendication 18, dans lequel le conteneur (310) comporte deux parties détachables incluant un couvercle et une base, dans lequel le couvercle est pour un scellement hermétique et la base est pour contenir les rouleaux de condensateur (340) dans les compartiments.

**20.** Supercondensateur de densité d'énergie élevée (300) selon la revendication 19, dans lequel toutes les parties du conteneur (310) sont réalisées en un matériau qui inclut un corps choisi parmi un groupe qui comprend du PE, du PP, du PE renforcé et du PP renforcé.

**21.** Supercondensateur de densité d'énergie élevée (300) selon la revendication 19, dans lequel le couvercle (420) et la base sont consolidés au moyen d'un matériau d'empotage.

**22.** Supercondensateur de densité d'énergie élevée (300) selon la revendication 18, dans lequel le dispositif qui est formé par une connexion série de plusieurs rouleaux de condensateur (340) dans le conteneur (310) est actionné à des tensions égales ou supérieures à 5 V, moyennant une valeur de capacité qui est égale ou supérieure à 1 F et une valeur de résistance série équivalente (ESR) qui est inférieure à 30 mΩ.

FIG. 1

200

209

208

205

204

210

207

203

206

212

201

202

211

FIG. 2

FIG. 3

FIG. 4

FIG. 5